# FASCICULE DE BREVET EUROPEEN

(11) **EP 2 039 907 B1**
(45) Date de publication et mention de la délivrance du brevet: **07.07.2010**
(21) Numéro de dépôt: 08163557.5
(22) Date de dépôt: 03.09.2008
(51) Int. Cl.: F02B 29/04, F02M 25/07

(54) **Dispositif de gestion des condensats dans un système EGR**
Vorrichtung zur Steuerung der Kondensate in einem Abgasrückführungssystem
Condensate management device in an EGR system.

(30) Priorité: 19.09.2007 FR 0757688
(43) Date de publication de la demande: 25.03.2009
(73) Titulaire: Peugeot Citroën Automobiles SA, 78943 Vélizy-Villacoublay Cedex (FR)
(72) Inventeur: Dumoulin, Pierre, 92250 La Garenne Colombes (FR)
(74) Mandataire: Ménès, Catherine

(56) Documents cités:
- DE-A1- 3 906 747
- FR-A- 2 880 387
- JP-A- 4 334 723
- JP-A- 2005 214 016
- US-A1- 2003 234 009
- US-B1- 6 283 725

## Description

L'invention se rapporte à un dispositif de gestion des condensats dans des systèmes de recyclage de gaz d'échappement appelés couramment « EGR » notamment pour moteur Diesel de véhicule automobile.

Il est connu il est proposé des moteurs de systèmes dits de type « EGR » en appellation anglo-saxonne : « Exhaust Gas Recirculation » qui permettent de réintroduire une partie des gaz d'échappement à l'admission du moteur. Ces systèmes comprennent par exemple une vanne de contrôle de recyclage et des moyens pour refroidir tout ou partie des gaz recirculés avant leur réadmission dans le moteur et des moyens de commande de l'ouverture/fermeture de la vanne pour contrôler la circulation de gaz dans le circuit.

De tels systèmes ont été développés pour répondre à des normes relatives au niveau des émissions polluantes liées au fonctionnement de ce type de moteur, ces normes étant de plus en plus sévères, en particulier en ce qui concerne les émissions d'oxyde d'azote.

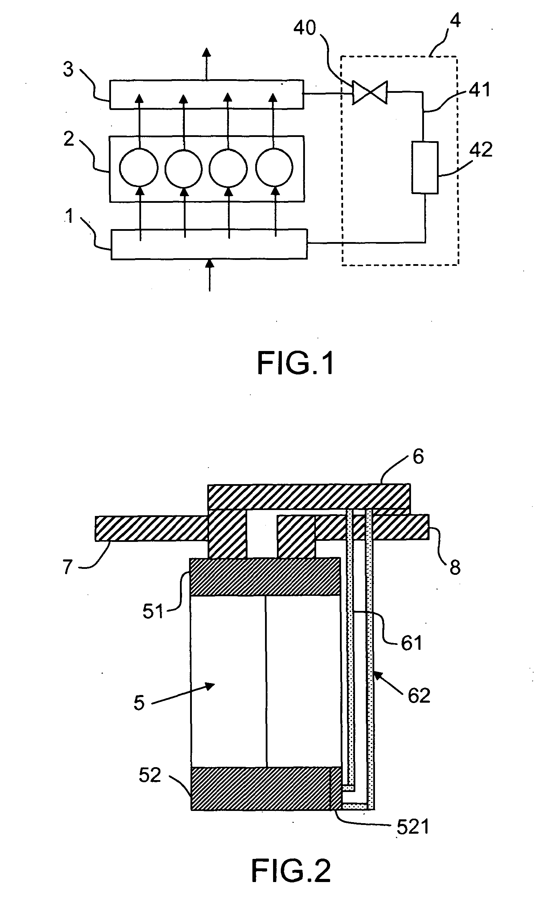

Un schéma de principe d'un moteur muni d'un tel système est illustré en figure 1 qui montre un moteur thermique 2 avec une voie d'admission de gaz 1 et une voie d'échappement de gaz 3, une fraction des gaz d'échappement étant réintroduite dans la voie d'admission au moyen d'un système 4 de type « EGR ». Ce système 4 comporte une vanne 40 permettant de régler le débit de gaz. Le circuit EGR constitue une liaison 41 entre le collecteur d'échappement 3 et le collecteur d'admission 1. Le circuit de recirculation comporte entre outre un refroidisseur 42, tel qu'un échangeur thermique à tubes pouvant échanger typiquement avec le liquide de refroidissement du moteur, afin de ne pas introduire de gaz trop chauds dans la chambre de combustion, ce qui pourrait entraîner une perte de rendement thermique.

Dans le cadre de la dépollution des moteurs Diesel, l'apport de gaz d'échappement à l'admission permet de réduire de manière significative les émissions d'oxydes d'azote (polluant réglementé).

Pour améliorer la puissance du moteur, on est par ailleurs amené à introduire de l'air sous-pression au niveau du moteur thermique. Pour cela on utilise un compresseur qui sort de l'air sous-pression chauffé qu'il convient de refroidir par un refroidisseur d'air suralimenté. Ce refroidisseur est encore dénommé couramment « RAS » pour refroidisseur d'air de suralimentation.

Le mélange des gaz d'échappement avec l'air frais s'effectue dans certaines configurations en amont du refroidisseur de suralimentation qui présente une efficacité de refroidissement élevée (température de parois très basse).

Au contact de cette paroi le mélange air extérieur / gaz d'échappement - riche en eau du fait de la de combustion du carburant (dont les deux produits de réaction sont à la base du dioxyde de carbone et de la vapeur d'eau) - génère une condensation d'eau à un débit non négligeable qui peut atteindre quelques litres d'eau par heure.

Dans certaines applications le refroidisseur d'air de suralimentation « classique » présente un point bas où cette eau peut s'accumuler, ce qui peut aller jusqu'à boucher la section de passage de l'air, et au risque de provoquer alors une casse moteur.

Ce problème se rencontre par exemple avec un échangeur de deux passes en 'U', c'est-à-dire un échangeur avec une entrée en haut et une sortie en haut et une « boite basse » servant au mélange ayant traversé une fois l'échangeur de le retraverser une seconde fois. Un tel échangeur est connu par exemple au travers de la demande de brevet français FR2880387, dans une variante comportant un dispositif de récupération et d'élimination à la traversée de l'échangeur de chaleur de l'huile entrainée par le flux d'air en circulation dans un turbocompresseur.

Selon l'invention, il est proposé une solution permettant d'assurer au dessus d'un certain niveau d'eau « estimé » dans la boite basse de l'échangeur, une ré-évaporation rapide (mais pas instantanée) de cette eau.

Plus précisément l'invention a pour objet un dispositif de gestion de condensats d'un échangeur de refroidissement de gaz pour véhicule automobile comportant un échangeur équipé d'un by-pass, des moyens d'alimentation d'un flux d'entrée de gaz dans ledit échangeur, ledit échangeur comportant une première boîte haute d'échangeur, et une seconde boîte basse d'échangeur, caractérisé en ce qu'il comprend :
- un premier et un second conduits montés en parallèle avec ledit échangeur et comportant des moyens de communication avec ladite seconde boîte de l'échangeur;
- des moyens d'estimation de la quantité de condensats présents dans la seconde boîte d'échangeur ;
- des moyens de commande de commutation du flux d'entrée permettant de faire transiter le flux de gaz dans l'échangeur ou à l'extérieur dudit échangeur dans le premier conduit en fonction de la quantité estimée de condensats dans la seconde boîte, de manière à pouvoir ré-évaporer une partie des condensats .

Selon une variante de l'invention, le flux d'entrée de gaz comporte de l'air comprimé.

Selon une variante de l'invention, le flux d'entrée de gaz comprend des gaz d'échappement du véhicule automobile.

Selon une variante de l'invention, le condensat comprend de l'eau.

Selon une variante de l'invention, les moyens de commande dirigent le flux de gaz à l'extérieur de l'échangeur dans le premier conduit lorsque la quantité de condensat est supérieure à une valeur seuil, pouvant typiquement être d'environ 0, 3 litre.

Selon une variante de l'invention, les moyens de commande dirigent le flux de gaz vers l'échangeur, lorsque la quantité de condensat est inférieure à une valeur seuil.

L'invention sera mieux comprise et d'autres avantages apparaîtront à la lecture de la description qui va suivre donnée à titre non limitatif et grâce aux figures annexés parmi lesquelles :

la figure 1 illustre un exemple de moteur thermique équipé d'un système EGR de retraitement de gaz d'échappement selon l'art connu;

la figure 2 illustre un exemple de dispositif de gestion de condensats selon l'invention ;

la figure 3a illustre un mode de fonctionnement du dispositif de l'invention lorsque le niveau d'eau est inférieur à une valeur seuil ;

la figure 3b illustre un mode de fonctionnement du dispositif de l'invention lorsque le niveau d'eau est supérieur à une valeur seuil ;

la figure 4 illustre un premier exemple de boîte basse pouvant être utilisée dans un dispositif de l'invention ;

la figure 5 illustre une variante d'exemple de boîte basse pouvant être utilisée dans un dispositif de l'invention.

L'invention est décrite ci-après dans le cadre d'un moteur Diesel, équipé d'un compresseur destiné à envoyer de l'air comprimé en alimentation moteur. Le condensat que l'on cherche à gérer est en l'occurrence de l'eau provenant de la réaction de combustion du carburant avec l'air d'admission. L'air comprimé, échauffé à l'issue de la compression peut être refroidi avant d'être injecté au niveau du moteur thermique. Pour cela il est envoyé dans un échangeur encore dénommé RAS. La figure 2 illustre un exemple de dispositif de gestion de condensats selon l'invention comportant un échangeur 5 couplé à un By-pass 6. L'échangeur présente une forme en « U » comportant deux boîtes, une boîte supérieure 51 et une boîte inférieure 52. Deux conduits 61 et 62 sont montés en parallèle de l'échangeur et mis en communication avec d'une part le By-pass et d'autre part la boîte inférieure. La boîte inférieure 52 est par ailleurs équipée de moyens 521 permettant d'évaluer la quantité d'eau présente que l'on cherche à contrôler de manière à ce que cette dernière ne dépasse pas une valeur seuil.

Le moyen d'estimation du niveau d'eau (521) peut présenter un mesureur de niveau ou un estimateur. Dans le cas de l'estimateur aucun capteur n'est présent dans l'échangeur, puisqu'il peut être présent par ailleurs sur la ligne d'air.

De l'air comprimé en provenance d'un compresseur 7 est injecté dans l'échangeur 5, ou peut passer directement via le By-pass en alimentation moteur, au niveau d'un répartiteur 8 dont la fonction est de définir le ratio entre gaz d'échappement recyclés et air comprimé en tant que flux d'alimentation pour le moteur thermique.

Nous allons décrire ci-après le mode de fonctionnement du dispositif de l'invention.

Les moyens 521 ont pour fonction d'estimer la quantité d'eau potentiellement présente dans l'échangeur. La fonction dépend du point de vue de la physique, des paramètres suivants :
- de la température extérieure Text
- de la température amont répartiteur T2"
- de la quantité de carburant injectée Q carb
- de la pression de suralimentation P sural
- de l'humidité relative externe Rh_ext
- du taux d'EGR : Tx EGR
- du débit d'air frais Q air frais

Toutes ces variables ne sont pas nécessairement connues par le contrôle moteur (en particulier Rh_ext). Certaines peuvent être majorées. Il peut notamment être considéré que le taux d'humidité extérieure est au maximum à 100%, dans le but de majorer le risque de condensation.

On peut estimer la quantité d'eau maximale pouvant arriver dans l'échangeur en fonction des paramètres Text, Qcarb, Tx EGR, Qair frais, d'un taux d'humidité majorée maximal en sortie de l'échangeur RAS et de la quantité maximale pouvant en sortir en fonction des paramètres T2", Psural. L'écart entre les deux quantités correspond à la quantité d'eau maximale condensée.

La condensation ou la ré-évaporation de l'eau est fortement fonction de la température du fluide y circulant :
- à 40°C en T2" , l'eau peut se condenser à 3Uh d'eau ;
- à 100°C en T2" , l'air peut réabsorber 90L/h d'eau.

Plus précisément et en tenant compte des paramètres suivants :
- Qeau : la concentration d'eau sous forme vapeur (kg eau / kg air)
- Qeau_inRAS : la concentration d'eau sous forme vapeur en entrée du RAS (kg eau / kg air)
- Qeau_outRAS : la concentration d'eau sous forme vapeur en sortie du RAS (kg eau / kg air)
- T out_sural_RAS : la température du mélange (air+eau), en sortie RAS
- P out_sural_RAS : la pression du mélange ( air+ eau) en sortie RAS

On peut établir que :
- Q eau_outRAS est une fonction des paramètres T out_sural_RAS et P out_sural_RAS
- Q eau_ext est une fonction de la température extérieure et du taux d'humidité.

Selon une variante de l'invention, il peut être prévu un capteur d'humidité permettant d'estimer le taux d'humidité. Cependant en l'absence d'un tel capteur, il est pris en compte un taux maximal d'humidité externe de 100%.
- Q eau Comb étant la concentration d'eau sous forme vapeur produite par la combustion (kg eau / kg air) ;
- Q carb étant la quantité d'eau générée par seconde et pouvant être pondérée par un coefficient k permettant de passer de la quantité de carburant à celle d'eau du fait de l'équation de la combustion ;
- Tx EGR = Taux d'EGR utilisé ;

On a les bilans suivants :
- (Qeau_Comb + Qeau_inRAS) * TxEGR + Qeau_ext (1-TxEGR) = Q eau_inRAS
- [(k.Qcarb * (1-TxEGR)/Qair + Q eau_inRAS] * TxEGR + Qeau_ext (1-TxEGR)
- Qeau_inRS = 0

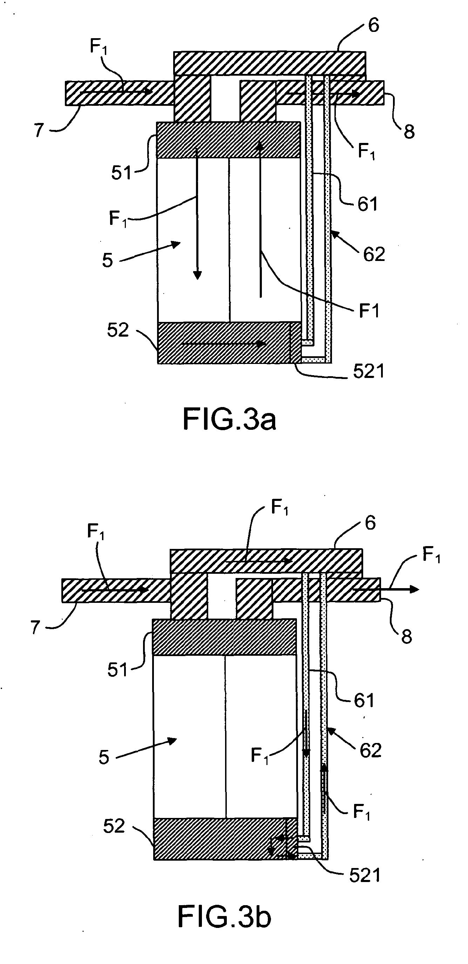

Typiquement dans une boîte classique inférieure d'échangeur en forme de « U » comportant deux boîtes, en deçà d'une certaine quantité d'eau estimée (grâce aux moyens 521), définie comme une quantité seuil, dans la boîte basse, le fonctionnement du dispositif de l'invention est celui de l'art connu, comme illustré en figure 3a. Le flux d'entrée F1 est acheminé depuis le compresseur 7 dans l'échangeur 5, transite par les boîtes haute 51 et basse 52, pour être réacheminé une fois refroidi vers le répartiteur 8.

Au delà de cette quantité seuil pouvant typiquement être une quantité d'environ 0,3 litre, les moyens de commande sont actionnés pour faire passer le flux d'air comprimé et de gaz d'échappements F1 par le by-pass et non directement dans l'échangeur comme illustré en figure 3b. Le flux de gaz chaud F1 est ainsi dirigé vers le premier conduit 61 pour être réintroduit au niveau de la seconde boîte, permettant le réchauffement du condensat présent dans ladite seconde boîte, entraînant par la même l'évaporation d'une partie de quantité d'eau présente dans ladite boîte. Le flux ainsi nouvellement généré est refroidi et moins de quantité d'eau est présente dans la boîte inférieure 152, permettant d'éviter les risques de formation de bouchon de glace notamment pouvant altérer la circulation des fluides y transitant.

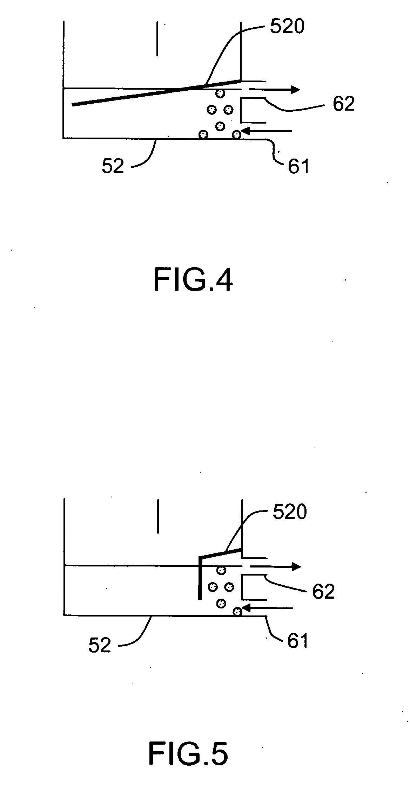

La figure 4 illustre un premier exemple de boîte basse pouvant être utilisée dans un dispositif de l'invention. Elle comporte en fond de boîte 52, un élément 520 permettant, depuis les deux conduits 61 et 62 de gérer le flux d'ébullition généré. Cet élément 520 peut typiquement être une plaque permettant d'orienter le flux généré en direction du conduit 62.

Selon une variante de l'invention, illustrée en figure 5, cet élément 520 peut également être composé d'une plaque en deux parties faisant entre elles un angle inférieur à 180 degrés.

## Revendications

1. Dispositif de gestion de condensats d'un échangeur de refroidissement de gaz pour véhicule automobile comportant un échangeur (5) équipé d'un by-pass (6), des moyens d'alimentation d'un flux d'entrée de gaz (F₁) dans ledit échangeur, ledit échangeur étant du type échangeur de deux passes en « U », comportant une boîte supérieure (51) avec une entrée et une sortie, et une boîte inférieure (52) servant au mélange ayant traversé une fois l'échangeur de le traverser une seconde fois, **caractérisé en ce qu'**il comprend :
- un premier (61) et un second (62) conduits montés en parallèle avec ledit échangeur et mis en communication avec d'une part le By-pass et d'autre part la boîte inférieure (52) ;
- des moyens (521) d'estimation de la quantité de condensats présents dans la seconde boîte d'échangeur ;
- des moyens de commande de commutation du flux d'entrée de gaz permettant de faire transiter, en fonction de la quantité estimée de condensats dans la boîte inférieure, le flux de gaz dans l'échangeur ou par le by-pass de sorte qu'il est dirigé vers le premier conduit (61) pour être réintroduit au niveau de la boîte inférieure (52) de manière à pouvoir ré-évaporer une partie des condensats, puis dirigé vers le second conduit (62).

2. Dispositif de gestion de condensats d'un échangeur de refroidissement de gaz pour véhicule automobile comportant un échangeur équipé d'un by-pass selon la revendication 1, **caractérisé en ce que** le flux d'entrée de gaz comporte de l'air comprimé.

3. Dispositif de gestion de condensats d'un échangeur de refroidissement de gaz pour véhicule automobile comportant un échangeur équipé d'un by-pass selon la revendication 1, **caractérisé en ce que** le flux d'entrée comporte des gaz d'échappement du véhicule automobile.

4. Dispositif de gestion de condensats d'un échangeur de refroidissement de gaz pour véhicule automobile comportant un échangeur équipé d'un by-pass selon l'une des revendications 1 ou 2, **caractérisé en ce que** le condensat comprend de l'eau.

5. Dispositif de gestion de condensats d'un échangeur de refroidissement de gaz pour véhicule automobile comportant un échangeur équipé d'un by-pass selon l'une des revendications 1 à 3, **caractérisé en ce que** les moyens de commande dirige le flux de gaz à l'extérieur de l'échangeur dans le premier conduit lorsque la quantité de condensat est supérieure à une valeur seuil d'environ 0,3 litre.

6. Dispositif de gestion de condensats d'un échangeur de refroidissement de gaz pour véhicule automobile comportant un échangeur équipé d'un by-pass selon l'une des revendications 1 à 4, **caractérisé en ce que** les moyens de commande dirige le flux de gaz vers le by-pass, lorsque la quantité de condensat est inférieure à une valeur seuil d'environ 0,3 litre.

7. Système de recirculation des gaz d'échappement d'un moteur thermique muni d'un dispositif de gestion des condensats selon la revendication l'une quelconque des revendications 1 à 6.

## Claims

1. A condensate management device of a gas cooling exchanger for an automobile vehicle comprising an exchanger (5) equipped with a bypass (6), supply means of a gas inlet flow (F₁) in the said exchanger, the said exchanger being of the type with two "U" passes, comprising an upper case (51) with an inlet and an outlet, and a lower case (52) serving for the mixture having passed once through the exchanger to pass through it a second time, **characterized in that** it comprises:
- a first (61) and a second (62) duct mounted in parallel with the said exchanger and placed in communication with, on the one hand, the bypass and, on the other hand, the lower box (52);
- means (521) for estimating the quantity of condensates present in the second exchanger case;
- means to control the switching of the inlet flow of gas, allowing it to cause the flow of gas to pass, as a function of the estimated quantity of condensates in the lower case, in the exchanger or by the bypass such that it is directed towards the first duct (61) to be reintroduced at the level of the lower case (52) so as to be able to re-evaporate a portion of the condensates, then directed towards the second duct (62).

2. The condensate management device of a gas cooling exchanger for an automobile vehicle comprising an exchanger equipped with a bypass according to Claim 1, **characterized in that** the inlet flow of gas comprises compressed air.

3. The condensate management device of a gas cooling exchanger for an automobile vehicle comprising an exchanger equipped with a bypass according to Claim 1, **characterized in that** the inlet flow comprises exhaust gases of the automobile vehicle.

4. The condensate management device of a gas cooling exchanger for an automobile vehicle comprising an exchanger equipped with a bypass according to one of Claims 1 or 2, **characterized in that** the condensate comprises water.

5. The condensate management device of a gas cooling exchanger for an automobile vehicle comprising an exchanger equipped with a bypass according to one of Claims 1 to 3, **characterized in that** the control means direct the flow of gas to the exterior of the exchanger in a first duct when the quantity of condensate is greater than a threshold value of approximately 0.3 litres.

6. The condensate management device of a gas cooling exchanger for an automobile vehicle comprising an exchanger equipped with a bypass according to one of Claims 1 to 4, **characterized in that** the control means direct the flow of gas towards the bypass when the quantity of condensate is less than a threshold value of approximately 0.3 litres.

7. A system for recirculation of exhaust gases of an internal combustion engine provided with a condensate management device according to any of Claims 1 to 6.

## Patentansprüche

1. Vorrichtung zum Verwalten von Kondensaten eines Gases eines Austauschers zum Gaskühlen für Kraftfahrzeug, die einen Austauscher (5) aufweist, der mit einem Bypass (6), Mitteln zum Zuführen eines Gaseingangsstroms (F₁) in den Austauscher ausgestattet ist, wobei der Austauscher des Typs Austauscher mit zwei "U"-Durchgängen ist, der ein oberes Gehäuse (51) mit einem Eingang und einem Ausgang und ein unteres Gehäuse (52) aufweist, das für das Gemisch dient, das den Austauscher einmal durchquert hat, um ihn ein zweites Mal zu durchqueren, **dadurch gekennzeichnet, dass** sie Folgendes aufweist:
- eine erste (61) und eine zweite (62) Leitung, die parallel zu dem Austauscher installiert sind und die einerseits mit dem Bypass und andererseits mit dem unteren Gehäuse (52) in Verbindung sind;
- Mittel (521) zum Schätzen der Menge an Kondensaten, die in dem zweiten Gehäuse gegenwärtig sind;
- Mittel zum Steuern des Umschaltens des Gaseinganggasstroms, die es in Abhängigkeit von der geschätzten Menge Kondensate in dem unteren Gehäuse erlauben, den Gasstrom durch den Austauscher oder durch den Bypass derart durchgehen zu lassen, dass er zu der ersten Leitung (61) gelenkt wird, um auf dem Niveau des unteren Gehäuses (52) derart wieder eingeführt zu werden, dass er einen Teil der Kondensate neu verdampfen kann, und dann zu der zweiten Leitung (62) gelenkt wird.

2. Vorrichtung zum Verwalten von Kondensaten eines Austauschers zum Gaskühlen für Kraftfahrzeug, die einen Austauscher aufweist, der mit einem Bypass nach Anspruch 1 ausgestattet ist, **dadurch gekennzeichnet, dass** der Gaseingangsstrom Druckluft enthält.

3. Vorrichtung zum Verwalten von Kondensaten eines Austauschers zum Gaskühlen für Kraftfahrzeug, die einen Austauscher aufweist, der mit einem Bypass nach Anspruch 1 ausgestattet ist, **dadurch gekennzeichnet, dass** der Eingangsstrom Auspuffgase des Kraftfahrzeugs enthält.

4. Vorrichtung zum Verwalten von Kondensaten eines Austauschers zum Gaskühlen für Kraftfahrzeug, die einen Austauscher aufweist, der mit einem Bypass nach einem der Ansprüche 1 oder 2 ausgestattet ist, **dadurch gekennzeichnet, dass** das Kondensat Wasser enthält.

5. Vorrichtung zum Verwalten von Kondensaten eines Austauschers zum Gaskühlen für Kraftfahrzeug, die einen Austauscher aufweist, der mit einem Bypass nach einem der Ansprüche 1 bis 3 ausgestattet ist, **dadurch gekennzeichnet, dass** die Steuermittel den Gasstrom aus dem Austauscher in der ersten Leitung nach außen lenken, wenn die Kondensatmenge größer ist als ein Schwellenwert von etwa 0,3 Liter.

6. Vorrichtung zum Verwalten von Kondensaten eines Austauschers zum Gaskühlen für Kraftfahrzeug, die einen Austauscher aufweist, der mit einem Bypass nach einem der Ansprüche 1 bis 4 ausgestattet ist, **dadurch gekennzeichnet, dass** die Steuermittel den Gasstrom zu dem Bypass lenken, wenn die Kondensatmenge kleiner ist als ein Schwellenwert von etwa 0,3 Liter.

7. Abgasumwälzsystem eines Verbrennungsmotors, der mit einer Vorrichtung zum Verwalten der Kondensate nach einem der Ansprüche 1 bis 6 versehen ist.
